# EUROPÄISCHE PATENTSCHRIFT

(11) **EP 2 691 163 B1**
(45) Veröffentlichungstag und Bekanntmachung des Hinweises auf die Patenterteilung: **13.05.2015**
(21) Anmeldenummer: 12712643.1
(22) Anmeldetag: 30.03.2012
(51) Int. Cl.: B01D 53/14, B01D 53/62

(54) **RÜCKHALTUNG VON AMINEN BEI DER ENTFERNUNG SAURER GASE MITTELS AMIN-ABSORPTIONSMITTELN**
RETENTION OF AMINES IN THE REMOVAL OF ACID GASES BY MEANS OF AMINE ABSORBENTS
RÉTENTION D'AMINES LORS DE L'ÉLIMINATION DE GAZ ACIDES AU MOYEN D'AGENTS D'ABSORPTION DE TYPE AMINE

(30) Priorität: 31.03.2011 EP 11160742
(43) Veröffentlichungstag der Anmeldung: 05.02.2014
(73) Patentinhaber: BASF SE, 67056 Ludwigshafen (DE)
(72) Erfinder: SIEDER, Georg, 67098 Bad Dürkheim (DE); NOTZ, Ralf, 67069 Ludwigshafen (DE); GARCIA ANDARCIA, Hugo Rafael, 68161 Mannheim (DE); SCHMIDT, Sandra, 45143 Essen (DE); MOSER, Peter, 50859 Köln (DE)
(86) Internationale Anmeldenummer: PCT/EP2012/055750
(87) Internationale Veröffentlichungsnummer: WO 2012/131016

(56) Entgegenhaltungen:
- WO-A1-2008/145658
- FR-A1- 2 938 454
- US-A1- 2003 045 756
- US-A1- 2009 282 977
- US-A1- 2011 168 020
- US-A1- 2012 060 689

## Beschreibung

Die vorliegende Erfindung betrifft ein Verfahren zur Entfernung saurer Gase aus einem Fluidstrom, z.B. zum Entfernen von Kohlendioxid aus Rauchgasen.

In zahlreichen Prozessen in der chemischen Industrie treten Fluidströme auf, die Sauergase, wie z.B. CO₂, H₂S, SO₂, CS₂, HCN, COS oder Merkaptane enthalten. Bei diesen Fluidströmen kann es sich beispielsweise um Gasströme wie Erdgas, Raffineriegas, Synthesegas, Rauchgase oder bei der Kompostierung organischer Substanzen enthaltender Abfallstoffe entstehende Reaktionsgase handeln. Die Entfernung der sauren Gase aus diesen Fluidströmen ist aus verschiedenen Gründen wünschenswert.

Die Entfernung von Kohlendioxid aus Rauchgasen dient insbesondere der Verminderung der Emission von Kohlendioxid, die als Hauptursache für den so genannten Treibhauseffekt angesehen wird.

Synthesegas besteht im Wesentlichen aus Kohlenmonoxid und Wasserstoff. Synthesegas wird im Allgemeinen durch Partialoxidation oder Steamreforming von Kohlenwasserstoffen hergestellt. Das rohe Synthesegas enthält saure Gase wie Kohlendioxid, Schwefelwasserstoff oder Carbonylsulfid, die entfernt werden müssen.

Der Gehalt an sauren Gasen in Erdgas wird durch geeignete Aufbereitungsmaßnahmen unmittelbar an der Erdgasquelle reduziert, denn diese bilden in dem vom Erdgas häufig mitgeführten Wasser Säuren, die korrosiv wirken.

Im industriellen Maßstab werden zur Entfernung von Sauergasen, wie Kohlendioxid, aus Fluidströmen häufig wässrige Lösungen organischer Basen, z. B. Amine wie insbesondere Alkanolamine, als Absorptionsmittel eingesetzt. Beim Lösen von Sauergasen bilden sich dabei aus der Base und den Sauergasbestandteilen ionische Produkte. Das Absorptionsmittel kann durch Erwärmen, Entspannen auf einen niedrigeren Druck oder Strippen regeneriert werden, wobei die ionischen Produkte zu Sauergasen zurück reagieren und/oder die Sauergase mittels Dampf abgestrippt werden. Nach dem Regenerationsprozess kann das Absorptionsmittel wiederverwendet werden.

Die Amine weisen allerdings einen nicht zu vernachlässigenden Dampfdruck auf. Daher enthält der von Sauergasen befreite Fluidstrom Spuren von Aminen. Die Kontamination des behandelten Fluidstroms ist aus verschiedenen Gründen unerwünscht. So ist es nachteilig, wenn mit dem behandelten Rauchgas Spuren von Aminen in die Umwelt entweichen.

Synthesegas ist das Ausgangsmaterial weiterer katalytischer Umsetzungen. Aminspuren können dabei als Katalysatorgift wirken.

Der Gehalt an Aminen in Erdgas oder dem daraus durch Verflüssigung hergestelltem LPG (Liquified Petroleum Gas) kann ebenfalls Beschränkungen unterliegen.

Im Stand der Technik ist vorgeschlagen worden, den behandelten Fluidstrom mit einer wässrigen Phase zu waschen, um mitgeführtes Amin zumindest teilweise in die wässrige Phase zu überführen.

Die EP 0 798 029 A2 offenbart ein Verfahren, bei dem ein Gas zur Absorption von Kohlendioxid mit einer basischen Aminoverbindung behandelt wird und das behandelte Gas dann bei 20 bis 60 °C mit einer wässrigen Phase in Kontakt gebracht, um mitgeführtes basisches Amin zumindest teilweise in die wässrige Phase zu überführen. Die wässrige Phase soll vorzugsweise Kondensat sein, das aus dem im Regenerationsturm freigesetzten Kohlendioxid auskondensiert wird.

Aus der US 2008/0159937 geht ein Verfahren zum Entfernen von Kohlendioxid aus einem Gasstrom hervor, bei dem der an Kohlendioxid verarmte Gasstrom in einem Packungsabschnitt des Absorptionsturms mit Wasser gewaschen wird. Das Wasser kann Kondensat vom Kopf der Regenerationskolonne sein oder Frischwasser zum Ausgleich von Verlustmengen.

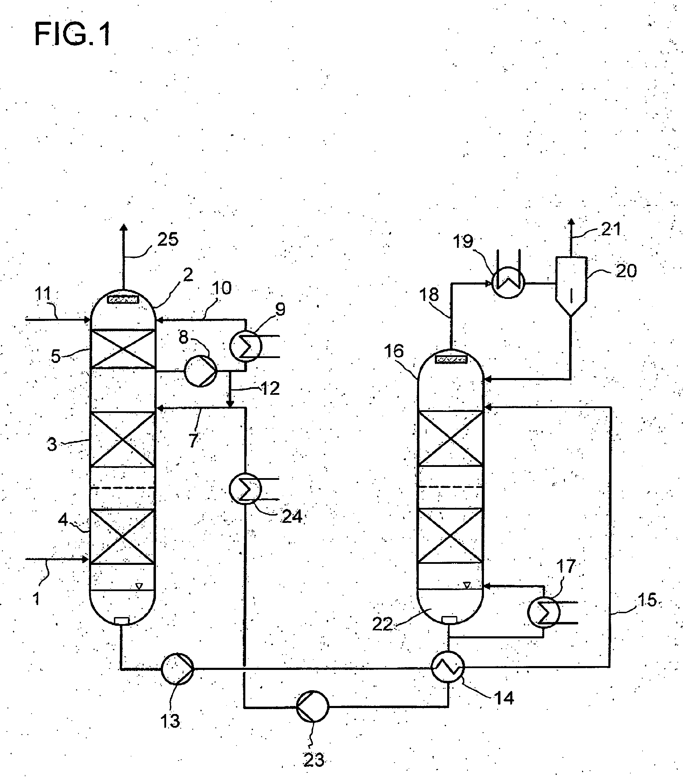

Die Verwendung von Kondensat, das aus dem im Regenerationsturm freigesetzten Kohlendioxid auskondensiert wird, als Waschwasser hat den Vorteil, dass es die Wasserbilanz des Absorptionsmittelkreislaufs nicht beeinträchtigt. Andererseits steht das Kondensat nur in begrenzter Menge zur Verfügung. Frischwasser kann als Waschwasser nur in begrenzter Menge eingesetzt werden, um das Absorptionsmittel nicht zu verdünnen und Wasser im Verfahren zu akkumulieren. Die aufzugebende Frischwassermenge ergibt sich aus der Differenz des Wassergehalts des eintretenden Fluidstroms und der austretenden Ströme. Für die in Fig. 1 gezeigte Konfiguration gehen beispielsweise der eintretende Strom 1 und die beiden austretenden Ströme 21 und 25 in die Wasserbilanz ein. Das zum Ausgleich von Verlustmengen erforderliche Frischwasser wird auch als Make-up Wasser (Strom 11 in der Fig. 1) bezeichnet. Die austretenden Ströme sind Wasserdampf-gesättigt. Der Wassergehalt des eintretenden Fluidstroms hängt von verschiedenen Bedingungen ab. Bei einem wassergesättigten eintretenden Fluidstrom nimmt der zur Verfügung stehende Make-up Strom mit kleiner werdender Druckdifferenz zwischen der Absorption und der Regeneration ab. Folglich ist insbesondere bei Rauchgaswäschen, bei denen der Absorptionsdruck nahe beim Atmosphärendruck liegt, die zur Verfügung stehende Menge Make-up Wasser begrenzt.

Um bei begrenzter Waschwassermenge dennoch eine ausreichende Waschwirkung zu erreichen, ist vorgeschlagen worden, das Waschwasser nicht im einfachen Durchgang durch die Waschzone zu führen, sondern das Waschwasser umzupumpen bzw. zu recyclieren, d. h. unterhalb der Waschzone zu sammeln und oberhalb der Waschzone wieder aufzugeben. Fakultativ kann das Waschwasser dabei über einen zusätzlichen Kühler geführt werden. Durch die Abkühlung wird aus dem behandelten Fluidstrom Wasser auskondensiert. Um eine Akkumulation ausgewaschener Absorptionsmittelbestandteile im Waschwasserkreislauf zu vermeiden wird eine Teilmenge des Waschwassers ausgeschleust und durch Make-up Wasser ersetzt. Das ausgeschleuste Wasser aus dem Waschwasserkreislauf wird üblicherweise in den Absorptionsmittelkreislauf geleitet.

In Satish Reddy et al. Fluor's Econamine FG PlusSM Technology präsentiert auf der Second National Conference on Carbon Sequestration, National Energy Technology Department of Energy, Alexandria VA, USA, May 5-8, 2003 ist eine typische Ausführungsform eines Gaswäscheverfahrens mit einer Waschzone mit umgepumpten Waschwasser dargestellt.

Durch die Recyclierung und fakultative Kühlung des Waschwassers kann die Waschwirkung erhöht werden. Übliche Volumenverhältnisse von recycliertem Waschwasser und Make-up Wasser liegen zwischen 10 und 500. Durch die Recyclierung tritt allerdings eine Rückvermischung des Waschwassers ein. Bei sehr hohen Volumenverhältnissen von recycliertem Waschwasser und Make-up Wasser kann in der Waschzone nur noch maximal die Wirkung einer theoretischen Trennstufe erreicht werden, unabhängig von der Länge der Kontaktstrecke in der Waschzone.

Die WO 2010/102877 beschreibt ein Verfahren, bei dem der an Kohlendioxid verarmte Gasstrom mit einer sauren wässrigen Lösung gewaschen wird, um die darin enthaltene Menge an Aminen und basischen Abbauprodukten zu verringern. Zwischen der Kohlendioxid-Absorptionszone und der sauren Wäsche kann eine Wäsche mit Wasser vorgesehen sein.

Die FR 2 938 454 und die US 2003/0045756 beschreiben ebenfalls Wäschen von Gasen die unit Aminlösungen behandelt wurden.

Der vorliegenden Erfindung liegt die Aufgabe zugrunde, ein Verfahren zur Entfernung saurer Gase aus Fluidströmen, insbesondere zur Entfernung von Kohlendioxid aus Rauchgasen, anzugeben, das eine effizientere Rückhaltung von Aminen aus den behandelten Fluidströmen erlaubt.

Die Erfindung stellt ein Verfahren zur Entfernung saurer Gase aus einem Fluidstrom bereit, bei dem man
a) den Fluidstrom in einer Absorptionszone mit einem Absorptionsmittel behandelt, das eine wässrige Lösung wenigstens eines Amins umfasst,
b) den behandelten Fluidstrom durch wenigstens zwei Waschzonen führt und mit einer nicht-sauren wässrigen Phase behandelt, um mitgeführtes Amin und/oder mitgeführte Amin-Zersetzungsprodukte zumindest teilweise in die wässrige Phase zu überführen, wobei man über wenigstens eine Waschzone wässrige Phase recycliert und durch wenigstens eine Waschzone wässrige Phase ohne Recyclierung führt.

Der behandelte Fluidstrom wird mit einer nicht-sauren flüssigen wässrigen Phase behandelt, um mitgeführtes Amin und/oder mitgeführte Amin-Zersetzungsprodukte zumindest teilweise in die wässrige Phase zu überführen. Mit anderen Worten wird das in den Fluidstrom übergetretene Amin aus diesem wieder ausgewaschen. Bei der Wäsche werden auch Amin-Zersetzungsprodukte, wie Nitrosamine oder Ammoniak, aus dem behandelten Fluidstrom ausgewaschen.

Als nicht-saure wässrige Phase eignet sich insbesondere Wasser selbst. Es versteht sich, dass bei der Durchführung des Verfahrens andere Komponenten, wie Amin und Amin-Zersetzungsprodukte, in die wässrige Phase übertreten können, so dass die nicht-saure wässrige Phase in der Regel mehr oder weniger von Wasser verschiedene Komponenten enthält. Die nicht-saure wässrige Phase ist neutral bzw. aufgrund mitgeführter Aminbestandteile leicht basisch. Im Allgemeinen beträgt der pH-Wert der nicht-sauren wässrigen Phase 7 bis 11, vorzugsweise 8 bis 10.

In den Waschzonen wird dem behandelten Fluidstrom die nicht-saure wässrige Phase im Gegenstrom entgegengeführt. Vorzugsweise weisen die Waschzonen Füllkörper, Packungen und/oder Böden auf, um den Kontakt des Fluidstrom mit der nicht-sauren wässrigen Phase zu intensivieren. Die nicht-saure wässrige Phase kann oberhalb der Waschzone durch geeignete Flüssigkeitsverteiler über den Querschnitt der Waschzone verteilt werden.

Als Absorptionszone wird die Sektion einer Absorptionskolonne angesehen, in der der Fluidstrom in Stoffaustausch-Kontakt mit dem Absorptionsmittel kommt.

In bevorzugten Ausführungsformen ist wenigstens eine Waschzone als oberhalb der Absorptionszone angeordnete Sektion der Absorptionskolonne-ausgebildet. Vorzugsweise sind alle Waschzonen zur Behandlung mit der nicht-sauren wässrigen Phase als oberhalb der Absorptionszone angeordnete Sektionen der Absorptionskolonne ausgebildet. Die Waschzonen sind dazu ein als Rückwaschsektion oder Verstärkungsteil ausgebildeter Abschnitt der Absorptionskolonne oberhalb der Einspeisung des Absorptionsmittels.

In anderen Ausführungsformen ist wenigstens eine Waschzone in einer von der Absorptionskolonne verschiedenen Waschkolonne angeordnet, z. B. einer Füllkörper-, Packungs- und Bodenkolonne, in der der behandelte Fluidstrom mit der nicht-sauren wässrigen Phase gewaschen wird.

Erfindungsgemäß recycliert man über wenigstens eine Waschzone nicht-saure wässrige Phase. Die nicht-saure wässrige Phase wird hierzu unterhalb der Waschzone, z. B. mittels eines geeigneten Sammelbodens, gesammelt und über eine Pumpe zum oberen Ende der Waschzone gepumpt. Die recyclierte nicht-saure wässrige Phase wird gekühlt, vorzugsweise auf eine Temperatur von 20 bis 70 °C, insbesondere 30 bis 60 °C. Hierzu wird die nicht-saure wässrige Phase zweckmäßigerweise über einen Kühler umgepumpt. Um eine Akkumulation ausgewaschener Absorptionsmittelbestandteile im Waschwasserkreislauf zu vermeiden wird zweckmäßigerweise ein Teilstrom der nicht-sauren wässrigen Phase ausgeschleust und durch Zulaufwasser ersetzt.

Durch wenigstens eine Waschzone führt man nicht-saure wässrige Phase ohne Recyclierung, d. h. die nicht-saure wässrige Phase durchläuft die Waschzone im einfachen Durchgang im Gegenstrom zum behandelten Fluidstrom.

Dabei ist eine erste Waschzone oberhalb der Absorptionszone und eine zweite Waschzone oberhalb der ersten Waschzone angeordnet, wobei man über die zweite Waschzone nicht-saure wässrige Phase recycliert, einen Teilstrom der über die zweite Waschzone recyclierten nicht-sauren wässrigen Phase durch die erste Waschzone führt und ablaufende nicht-saure wässrige Phase aus der ersten Waschzone mit dem Absorptionsmittel in der Absorptionszone vereinigt. Die über die zweite Waschzone recyclierte nicht-saure wässrige Phase wird gekühlt, vorzugsweise auf eine Temperatur von 20 bis 70 °C, insbesondere 30 bis 60 °C. Hierzu wird die nicht-saure wässrige Phase zweckmäßigerweise über einen Kühler umgepumpt. Zweckmäßigerweise speist man Zulaufwasser in die zweite Waschzone, um das Volumen des Teilstroms zu ersetzen.

In einer nicht erfindungsgemässen Ausführungsform ist eine erste Waschzone oberhalb der Absorptionszone und eine zweite Waschzone oberhalb der ersten Waschzone angeordnet, wobei man über die erste Waschzone nicht-saure wässrige Phase recycliert, Zulaufwasser auf die zweite Waschzone gibt, das Zulaufwasser durch die zweite Waschzone führt und mit der nicht-sauren wässrigen Phase in der ersten Waschzone vereinigt. Zweckmäßigerweise entfernt man einen Teilstrom der recyclierten nicht-sauren wässrigen Phase und leitet den Teilstrom vorzugsweise in den Absorptionsmittelkreislauf. Diese Ausführungsform ist im Allgemeinen weniger bevorzugt, da die zweite Waschzone ausschließlich mit Zulaufwasser betrieben wird und die hydraulisch notwendige Menge an wässriger Phase unterschritten werden kann, die für eine funktionierende Wäsche, z. B. die Benutzung von Einbauten in der Waschzone, erforderlich ist.

Das Zulaufwasser kann zumindest teilweise Kondensat umfassen, das aus dem bei der Regeneration, z. B. in einem Stripper, freigesetzten sauren Gasen auskondensiert ist. Die Verwendung dieses Kondensats als Zulaufwasser hat den Vorteil, dass es die Wasserbilanz des Absorptionsmittelkreislaufs nicht beeinträchtigt. Andererseits kann das Kondensat in Abhängigkeit von den Bedingungen im Stripper Amine aus dem Absorptionsmittel enthalten, so dass die Waschwirkung des Kondensats begrenzt ist und sehr niedrige Aminkonzenträtionen im behandelten Fluidstrom nicht erreicht werden können. Die (ausschließliche) Verwendung des Kondensats als Zulaufwasser ist daher im Allgemeinen nicht bevorzugt.

Vorzugsweise umfasst das Zulaufwasser zumindest teilweise Frischwasser. Als Frischwasser wird Wasser, z. B. Heißdampfkondensat, angesehen, das keine signifikanten Mengen Amin, Amin-Zersetzungsprodukte oder andere Absorptionsmittelbestandteile enthält. Vorzugsweise entspricht die Menge an Frischwasser im Wesentlich der Wasserverlustmenge des Absorptionsmittelkreislaufs (Make-up Wasser), um die Wasserbilanz des Absorptionsmittelkreislaufs nicht zu beeinträchtigen und eine Akkumulation von Wasser zu verhindern.

Die erfindungsgemäße Wäsche des behandelten Fluidstroms gestattet die Entfernung der Hauptmenge des mitgeführten Amins und/oder mitgeführter Amin-Zersetzungsprodukte. Eine weitergehende Reinigung des behandelten Fluidstroms zur Entfernung letzter Spuren von mitgeführtem Amin und/oder zur Entfernung von basischen AminZersetzungsprodukten mit hohem Dampfdruck gelingt in einer Ausführungsform des erfindungsgemäßen Verfahrens, bei der man den behandelten Fluidstrom anschließend mit einer sauren wässrigen Lösung wäscht. Hierzu kann man den behandelten Fluidstrom durch eine Waschzone führen, vorzugsweise in einer Waschkolonne, z. B. einer Füllkörper-, Packungs- und Bodenkolonne, über die man die saure wässrige Lösung recycliert. Die Säure protoniert die mitgeführten Aminspuren oder Amin-Zersetzungsprodukte und erniedrigt so drastisch deren Dampfdruck. Die protonierten Verbindungen werden aufgrund ihres salzartigen Charakters leicht in die wässrige Phase überführt.

Als Säuren eignen sich anorganische oder organische Säuren, wie Schwefelsäure, Schweflige Säure, Phosphorsäure, Salpetersäure, Essigsäure, Ameisensäure, Kohlensäure, Citronensäure und dergleichen. Vorzusweise weist die verwendete Säure einen pKs-Wert von -4 bis 7 auf. Der bevorzugte pH-Wert der sauren wässrigen Lösung beträgt 3 bis 7, insbesondere 4 bis 6.

Als saure wässrige Lösung eignen sich insbesondere saure Prozesswässer. Derartige saure Prozesswässer fallen insbesondere bei der Behandlung Schwefeldioxid-haltiger Gase an, z. B. in einer SO₂-Vorreinigungsstufe. So wird bei der Kühlung bzw. Vorwäsche Schwefeldioxid-haltiger Gase ein saures Kondensat erhalten, das als saures Prozesswasser verwendet werden kann.

Durch die Absorption von Aminen und/oder Aminzersetzungsprodukten in die saure wässrige Lösung steigt die Konzentration der Amine und/oder Amin-Zersetzungsprodukte in der sauren wässrigen Lösung an. Um zu hohe Konzentrationen gelöster Salze in der sauren wässrigen Lösung zu vermeiden, schleust man zweckmäßigerweise einen Teilstrom der sauren wässrigen Lösung aus und ersetzt diesen durch frische saure wässrige Lösung. Aus dem ausgeschleusten Teilstrom kann man die Amine bzw. Amin-Zersetzungsprodukte, wie Ammoniak, zumindest teilweise zurückgewinnen. Hierzu kann man die ausgeschleuste wässrige Lösung mit einem Alkali, z. B. Natriumhydroxid, behandeln, wobei die Amine bzw. Amin-Zersetzungsprodukte freigesetzt werden.

Alternativ kann die ausgeschleuste wässrige Lösung verworfen oder einer Abwasserbehandlung zugeführt werden.

Vor der Behandlung mit dem Absorptionsmittel wird der Fluidstrom, z. B. Rauchgas, vorzugsweise einer Wäsche mit einer wässrigen Flüssigkeit, insbesondere mit Wasser, unterzogen, um den Fluidstrom abzukühlen und zu befeuchten (quenchen). Bei der Wäsche können auch Stäube oder gasförmige Verunreinigungen wie Schwefeldioxid entfernt werden. Bei der Behandlung Schwefeldioxid-haltiger Gase erhält man so ein saures Prozesswasser, das als zuvor beschrieben saure wässrige Lösung verwendet werden kann.

Die Behandlung des Fluidstroms mit dem Absorptionsmittel erfolgt in einem Absorptionsturm bzw. Absorptionskolonne, z. B. Füllkörper, Packungs- und Bodenkolonne. Die Behandlung des Fluidstroms mit dem Absorptionsmittel erfolgt bevorzugt in einer Absorptionskolonne im Gegenstrom. Der Fluidstrom wird dabei im Allgemeinen in einen unteren Bereich und das Absorptionsmittel in einen oberen Bereich der Kolonne eingespeist.

Die Temperatur des Absorptionsmittels beträgt im Absorptionsschritt im Allgemeinen etwa 20 bis 90°C, bei Verwendung einer Kolonne beispielsweise 20 bis 60°C am Kopf der Kolonne und 30 bis 90°C am Boden der Kolonne. Es entstehen ein an sauren Gasbestandteilen armer, d. h. ein an diesen Bestandteilen abgereicherter Fluidstrom, und ein mit sauren Gasbestandteilen beladenes Absorptionsmittel.

Aus dem mit den sauren Gasbestandteilen beladenen Absorptionsmittel können Kohlendioxid und andere saure Gase in einem Regenerationsschritt freigesetzt werden, wobei ein regeneriertes Absorptionsmittel erhalten wird. Im Regenerationsschritt wird die Beladung des Absorptionsmittels verringert und die erhaltene regenerierte Absorptionsflüssigkeit wird vorzugsweise anschließend in den Absorptionsschritt zurückgeführt.

Im Allgemeinen regeneriert man die beladene Absorptionsflüssigkeit durch Erwärmung, z. B. auf 70 bis 130 °C, Entspannung, Strippen mit einem inerten Fluid oder eine Kombination zweier oder aller dieser Maßnahmen. Vorzugsweise regeneriert man die beladene Absorptionsflüssigkeit in einem Stripper. Das für die Strippung benötigte Strippgas wird durch teilweise Verdampfung der Absorptionsflüssigkeit im Sumpf des Strippers erzeugt.

Bevor das regenerierte Absorptionsmittel wieder in den Absorptionsturm eingeführt wird, wird es auf eine geeignete Absorptionstemperatur abgekühlt. Um die in dem heißen regenerierten Absorptionsmittel enthaltene Energie auszunutzen, ist es bevorzugt, das beladene Absorptionsmittel aus dem Absorber durch indirekten Wärmetausch mit dem heißen regenerierten Absorptionsmittel vorzuerwärmen. Durch den Wärmetausch wird das beladene Absorptionsmittel auf eine höhere Temperatur gebracht, so dass im Regenerationsschritt ein geringerer Energieeinsatz erforderlich ist. Durch den Wärmetausch kann auch bereits eine teilweise Regenerierung des beladenen Absorptionsmittels unter Freisetzung von Kohlendioxid erfolgen.

Das Absorptionsmittel umfasst wenigstens ein Amin. Vorzugsweise umfasst das Amin wenigstens ein primäres oder sekundäres Amin.

Bevorzugte Amine sind die folgenden:
(i) Amine der Formel I:

   NR¹(R²)₂ (I)

   worin R¹ unter C₂-C₆-Hydroxyalkylgruppen, C₁-C₆-Alkoxy-C₂-C₆-alkylgruppen, Hydroxy-C₁-C₆-Alkoxy-C₂-C₆-alkylgruppen und 1-Piperazinyl-C₂-C₆-alkylgruppen ausgewählt ist und R² unabhängig unter H, C₁-C₆-Alkylgruppen und C₂-C₆-Hydroxyalkylgruppen ausgewählt ist;
(ii) Amine der Formel II:

   R³R⁴N-X-NR⁵R⁶ (II)

   worin R³, R⁴, R⁵ und R⁶ unabhängig voneinander unter H, C₁-C₆-Alkylgruppen, C₂-C₆-Hydroxyalkylgruppen, C₁-C₆-Alkoxy-C₂-C₆-alkylgruppen und C₂-C₆-Aminoalkylgruppen ausgewählt sind und X für eine C₂-C₆-Alkylengruppe, -X¹-NR⁷-X²- oder -X¹-O-X²- steht, worin X¹ und X² unabhängig voneinander für C₂-C₆-Alkylengruppen stehen und R⁷ für H, eine C₁-C₆-Alkylgruppe, C₂-C₆-Hydroxyalkylgruppe oder C₂-C₆-Aminoalkylgruppe steht;
(iii) 5- bis 7-gliedrige gesättigte Heterocyclen mit wenigstens einem Stickstoffatom im Ring, die ein oder zwei weitere, unter Stickstoff und Sauerstoff ausgewählte Heteroatome im Ring enthalten können, und
(iv) Gemische davon.

Spezifische Beispiele sind:
(i) 2-Aminoethanol (Monoethanolamin), 2-(Methylamino)ethanol, 2-(Ethylamino)-ethanol, 2-(n-Butylamino)ethanol, 2-Amino-2-methylpropanol, N-(2-Aminoethyl)-piperazin, Methyldiethanolamin, Ethyldiethanolamin, Diemthylaminopropanol, t-Butylaminoethoxyethanol, 2-Aminomethylpropanol;
(ii) 3-Methylaminopropylamin, Ethylendiamin, Diethylentriamin, Triethylentetramin, 2,2-Dimethyl-1,3-diaminopropan, Hexamethylendiamin, 1,4-Diaminobutan, 3,3-Iminobispropylamin, Tris(2-aminoethyl)amin, Bis(3-dimethylamino-propyl)amin, Tetramethylhexamethylendiamin;
(iii) Piperazin, 2-Methylpiperazin, N-Methylpiperazin, 1-Hydroxyethyl-piperazin, 1,4-Bis-hydroxyethyl-piperazin, 4-Hydroxyethyl-piperidin, Homopiperazin, Piperidin, 2-Hydroxyethylpiperidin und Morpholin; und
(iv) Gemische davon.

Davon sind Monoethanolamin, Piperazin, Methylaminopropylamin, Diethanolamin, 1-Hydroxyethyl-piperazin besonders bevorzugt.

Im Allgemeinen umfasst das Absorptionsmittel 10 bis 60 Gew.-% Amin.

Die Absorptionsflüssigkeit kann auch Additive, wie Korrosionsinhibitoren, Enzyme etc. enthalten. Im Allgemeinen liegt die Menge an derartigen Additiven im Bereich von etwa 0,01-3 Gew.-% der Absorptionsflüssigkeit.

Das erfindungsgemäße Verfahren ist geeignet zur Behandlung von Fluidströmen, insbesondere Gasströmen aller Art. Bei den sauren Gasen handelt es sich insbesondere um CO₂, H₂S, COS und Merkaptane. Außerdem können auch SO₃, SO₂, CS₂ und HCN entfernt werden. In der Regel umfassen die sauren Gase zumindest CO₂ oder bestehen ausschließlich aus CO₂.

Fluide, welche die sauren Gase enthalten, sind einerseits Gase, wie Erdgas, Synthesegas, Koksofengas, Spaltgas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids).

In bevorzugten Ausführungsformen ist der Fluidstrom ein
(i) Wasserstoff enthaltender Fluidstrom; hierzu zählen Synthesegase, die z. B. durch Kohlevergasung oder Steamreforming herstellbar sind und gegebenenfalls einer Wassergas-Shift-Reaktion unterzogen sind; die Synthesegase werden z. B. zur Herstellung von Ammoniak, Methanol, Formaldehyd, Essigsäure, Harnstoff, zur Fischer-Tropsch-Synthese oder zur Energiegewinnung in einem Integrated Gasification Combined Cycle (IGCC) Prozess verwendet;
(ii) Kohlenwasserstoffe enthaltender Fluidstrom; hierzu zählen Erdgas, Abgase verschiedener Raffinerieprozesse, wie der Tailgas Unit (TGU), eines Visbreakers (VDU), eines katalytischen Crackers (LRCUU/FCC), eines Hydrocrackers (HCU), eines Hydrotreaters (HDS/HTU), eines Cokers (DCU), einer Atmosphärischen Destillation (CDU) oder eines Liquid Treaters (z. B. LPG).

Das erfindungsgemäße Verfahren bzw. Absorptionsmittel ist zur Behandlung von sauerstoffhaltigen Fluidströmen, wie Rauchgasen, geeignet.

In bevorzugten Ausführungsformen entstammt der sauerstoffhaltige Fluidstrom
a) der Oxidation organischer Substanzen,
b) der Kompostierung oder Lagerung organischer Substanzen enthaltender Abfallstoffe, oder
c) der bakteriellen Zersetzung organischer Substanzen.

In einigen Ausführungsformen beträgt der Partialdruck von Kohlendioxid im Fluidstrom weniger als 500 mbar, z. B. 30 bis 150 mbar,

Die Oxidation kann unter Flammenerscheinung, d. h. als herkömmliche Verbrennung, oder als Oxidation ohne Flammenerscheinung, z. B, in Form einer katalytischen Oxidation oder Partialoxidation, durchgeführt werden. Organische Substanzen, die der Verbrennung unterworfen werden, sind üblicherweise fossile Brennstoffe wie Kohle, Erdgas, Erdöl, Benzin, Diesel, Raffinate oder Kerosin, Biodiesel oder Abfallstoffe mit einem Gehalt an organischen Substanzen. Ausgangsstoffe der katalytischen (Partial-) Oxidation sind z. B. Methanol oder Methan, das zu Ameisensäure oder Formaldehyd umgesetzt werden kann.

Abfallstoffe, die der Oxidation, der Kompostierung oder Lagerung unterzogen werden, sind typischerweise Hausmüll, Kunststoffabfälle oder Verpackungsmüll.

Die Verbrennung der organischen Substanzen erfolgt meistens in üblichen Verbrennungsanlagen mit Luft. Die Kompostierung und Lagerung organischer Substanzen enthaltender Abfallstoffe erfolgt im Allgemeinen auf Mülldeponien. Das Abgas bzw. die Abluft derartiger Anlagen kann vorteilhaft nach dem erfindungsgemäßen Verfahren behandelt werden.

Als organische Substanzen für bakterielle Zersetzung werden üblicherweise Stalldung, Stroh, Jauche, Klärschlamm, Fermentationsrückstände, Silage und dergleichen verwendet. Die bakterielle Zersetzung erfolgt z.B. in üblichen Biogasanlagen. Die Abluft derartiger Anlagen kann vorteilhaft nach dem erfindungsgemäßen Verfahren behandelt werden.

Das Verfahren eignet sich auch zur Behandlung der Abgase von Brennstoffzellen oder chemischer Syntheseanlagen, die sich einer (Partial-) Oxidation organischer Substanzen bedienen.

Die Fluidströme der obigen Genese a), b) oder c) können beispielsweise entweder den Druck aufweisen, der etwa dem Druck der Umgebungsluft entspricht, also z. B. Normaldruck oder einen Druck, der vom Normaldruck um bis zu 1 bar abweicht.

Die Erfindung wird durch die beigefügte Zeichnung und die nachfolgenden Beispiele näher veranschaulicht.

Figur 1 zeigt eine Anlage zur Entfernung saurer Gase aus einem Gasstrom mit einer Wäschzone zum Auswaschen von mitgeführter Absorptionsflüssigkeit aus dem behandelten Gas nach dem Stand der Technik.

Figur 2 zeigt eine zur Durchführung des erfindungsgemäßen Verfahrens geeignete Anlage zur Entfernung saurer Gase aus einem Gasstrom.

Figur 3 zeigt eine zur Durchführung einer weiteren Ausführungsform des erfindungsgemäßen Verfahrens geeignete Anlage zur Entfernung saurer Gase aus einem Gasstrom.

Gemäß Figur 1 wird ein Gasstrom 1 in den unteren Teil einer Absorptionskolonne 2 geleitet. Die Absorptionskolonne 2 weist Absorptionszonen 3, 4 und eine Waschzone 5 auf. In den Absorptionszonen 3, 4 wird das Gas im Gegenstrom mit einem Absorptionsmittel in Kontakt gebracht, das über die Leitung 7 oberhalb der Absorptionszonen in die Absorptionskolonne 2 eingeführt wird. Das an Sauergasen verarmte Gas wird in der Waschzone 5 mit einer wässrigen Phase gewaschen, die über die Pumpe 8, den Kühler 9 und Leitung 10 recycliert wird. Über Leitung 11 wird Frischwasser zum Ausgleich von Verlustmengen (Make-up Wasser) auf die Waschzone 5 aufgegeben. In der Waschzone 5 wird das Wasserdampf-gesättigte behandelte Gas gleichzeitig abgekühlt, wodurch Wasser auskondensiert wird. Durch das auskondensierte Wasser und das Make-up Wasser wird dem Waschkreislauf Flüssigkeit zugeführt. Überschüssige flüssige Phase aus dem Waschkreislauf wird über die Leitung 12 in den Absorptionsmittelkreislauf geleitet. Hierdurch wird eine Akkumulation von aus dem behandelten Rauchgas ausgewaschenen Absorptionsmittelbestandteilen im Waschwasserkreislauf verhindert. Der behandelte Gasstrom verlässt die Absorptionskolonne 2 über die Leitung 25.

Das mit Kohlendioxid beladene Absorptionsmittel wird am Boden der Absorptionskolonne 2 entnommen und über die Pumpe 13, Wärmetauscher 14 und Leitung 15 in den Stripper 16 geführt. Im unteren Teil des Strippers 16 wird das beladene Absorptionsmittel über den Verdampfer 17 erwärmt und partiell verdampft. Durch die Temperaturerhöhung geht ein Teil des absorbierten Kohlendioxids wieder in die Gasphase über. Die Gasphase 18 wird am Kopf des Strippers 16 abgeführt und dem Kondensator 19 zugeführt. Kondensat wird im Phasentrenngefäß 20 gesammelt und in den Stripper 16 zurückgeführt. Das gasförmige Kohlendioxid wird als Strom 21 entnommen. Das regenerierte Absorptionsmittel 22 wird über den Wärmetauscher 14, Pumpe 23, den Kühler 24 und Leitung 7 wieder zur Absorptionskolonne 2 zurückgeführt.

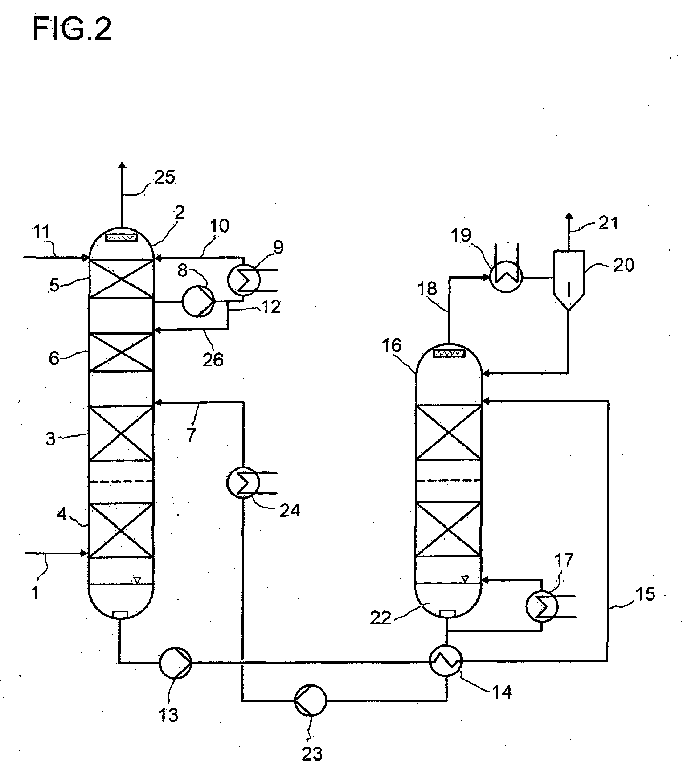

In Figur 2 haben gleiche Bezugszeichen die gleiche Bedeutung wie in Figur 1. Die Absorptionskolonne 2 weist zwei Waschzonen 5, 6 auf. Das an Sauergas verarmte Gas wird in der Waschzone 6 mit einer wässrigen Phase gewaschen, die über die Leitung 26 oberhalb der Waschzone 6 aufgegeben wird. Anschließend passiert das behandelte Gas die Waschzone 5 und wird mit einer wässrigen Phase gewaschen, die über die Pumpe 8, den Kühler 9 und Leitung 10 recycliert wird. Über Leitung 11 wird Frischwasser zum Ausgleich von Verlustmengen (Make-up Wasser) auf die Waschzone 5 aufgegeben. Überschüssige flüssige Phase aus dem Waschwasserkreislauf wird nicht direkt in den Absorptionsmittelkreislauf geleitet, sondern über die Leitung 26 oberhalb der Waschzone 6 aufgegeben. Die aus der Waschzone 6 ablaufende wässrige Phase läuft im Inneren der Absorptionskolonne 2 in die Absorptionszone 3.

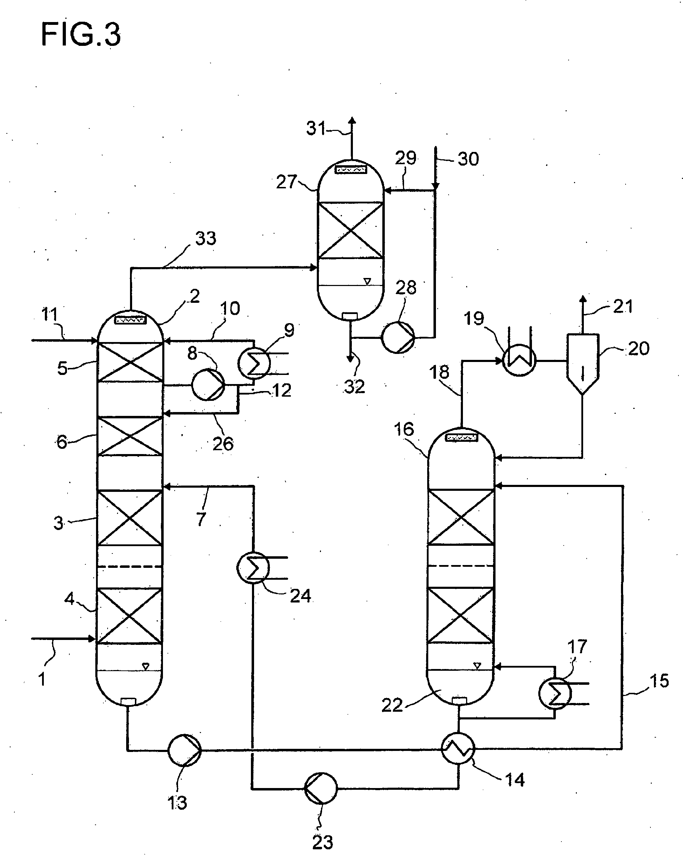

Fig. 3 zeigt eine weitere Ausführungsform der Erfindung. In Figur 3 haben gleiche Bezugszeichen die gleiche Bedeutung wie in Figur 2. Das die Absorptionskolonne 2 verlassende behandelte Gas wird über die Leitung 33 einer Waschkolonne 27 zugeführt und mit einer sauren wässrigen Lösung gewaschen, die über die Pumpe 28 und Leitung 29 umgepumpt wird. Erschöpfte saure wässrige Lösung wird über Leitung 32 abgeführt. Frische saure wässrige Lösung wird über Leitung 30 herangeführt. Das behandelte Gas verlässt die Anlage über Leitung 31.

### Vergleichsbeispiel 1

Man verwendete eine Anlage gemäß Figur 1. Die Absorptionskolonne wies einen Durchmesser von 600 mm auf; als Einbauten wurde eine strukturierte Packung mit einer spezifischen Oberfläche 250 m²/m³ verwendet. Oberhalb des Zulaufes des Absorptionsmittels war eine Waschzone zur Wasserwäsche mit Recyclierung und Kühlung installiert. Die Betthöhe der Waschzone betrug 3 m.

Eine 32 Gew.-%ige wässrige Monoethanolamin-Lösung wurde als basisches Absorptionsmittel verwendet, das mit 40°C zulief. Der Absorptionskolonne wurde Rauchgas (1563 kg/h) mit einer Temperatur von 40°C und einem Wassergehalt von 3,6 Vol.-% und einem CO₂ Gehalt von 14,0 Vol.-% zugeführt. In der Anlage wurden 90% des zugeführten CO₂ abgetrennt. Die umgepumpte Menge an Waschwasser betrug 5500 kg/h und das Waschwasser wurde auf 41 °C abgekühlt. An Make-up Wasser wurde der Anlage 34 kg/h zugeführt. Die Temperatur des Gases oberhalb der Absorptionssektion betrug 67°C und wurde über die Wasserwäsche auf 41 °C abgekühlt.

Der Gehalt an Monoethanolamin im Waschwasser wurde mit einem Gaschromatographen ermittelt und betrug 0,8 Gew.-%.

### Beispiel 2

Man verwendete eine Anlage gemäß Figur 2. Oberhalb des Zulaufes des Absorptionsmittels war eine erste Waschzone (ohne Recyclierung) mit einer Höhe von 4,5 m, oberhalb der ersten Waschzone eine zweite Waschzone mit einer Höhe von 3 m zur Wasserwäsche mit Recyclierung und Kühlung installiert.

Die Rauchgasmenge betrug 1540 kg/h mit einem Wassergehalt von 3,6 Vol.% und einem CO₂-Gehalt von 14 Vol.%, wovon wie im Vergleichsbeispiel 1 90% abgetrennt werden. Der Gehalt an Monoethanolamin im Absorptionsmittel betrug 27 Gew.-%. Es wurden in der zweiten Waschzone 5000 kg/h Waschwasser umgewälzt und dabei auf 39°C abgekühlt. An Make-up Wasser wurde der zweiten Waschzone 28 kg/h zugefahren. Durch die Abkühlung des Gases in der zweiten Waschzone (von 63,5°C auf 39°C) wurde zusätzlich Wasser auskondensiert. Ein Volumenstrom von 188 kg/h Wasser wurde in die erste Waschzone geleitet.

Mit dieser Konfiguration konnte mittels Gaschromatograph kein Monoethanolamin im recyclierten Waschwasser nachgewiesen werden. Die Nachweisgrenze betrug 0,01 Gew.-%.

Die unterschiedlichen Gehalte an Monoethanolamin im recyclierten Waschwasser korrelieren mit entsprechenden Gehalten von Monoethanolamin im behandelten Fluidstrom, d. h. der die Absorptionskolonne verlassende behandelte Fluidstrom enthielt im Beispiel 2 signifikant weniger Monoethanolamin als im Vergleichsbeispiel 1.

Mittels eines Simulationsmodells wurden für beide Konfigurationen (Vergleichsbeispiel 1 und Beispiel 2) Rechnungen durchgeführt. Basis des Simulationsmodells ist ein thermodynamisches Modell auf Basis des Electolyte-NRTL Ansatzes nach Chen et al. (Chen, C.C; Evans, L.B.: A local Composition Model for the Excess Gibbs Energy of Aqueous Electrolyte Solutions, AlChE J. (1986) 32(3), 444), mittels dessen die Phasengleichgewichte für dieses System beschrieben werden können. Die Simulation der Absorptionsvorgänge wird mittels eines stoffübergangsbasierten Ansatzes beschrieben; Details dazu sind bei Asprion (Asprion, N.: Nonequilibrium Rate-Based Simulation of Reactive Systems: Simulation Model, Heat Transfer, and Influence of Film Discretization,; Ind. Eng. Chem. Res. (2006) 45(6), 2054-2069) beschrieben.

### Vergleichsbeispiel 3

Dieses Beispiel beruht auf der Anlagenkonfiguration von Vergleichsbeispiel 1. Die Absorptionskolonne ist mit einer strukturierten Packung mit einer geometrischen Oberfläche von 250 m²/m³ ausgestattet und besitzt einen Durchmesser von 600 mm. Die Waschzone mit Recyclierung und Kühlung hat eine Packungshöhe von 3 m.

Der Simulation liegen folgende Werte zu Grunde: 1540 kg/h Rauchgas mit einer Zusammensetzung von 14 Vol.-% CO₂ und 3,6 Vol.-% Wasser, 5,5 Vol.-% Sauerstoff und 76,9 Vol.-% Stickstoff wird mit 40°C in die Absorptionskolonne gegeben. Dort wird im Gegenstrom mit einer 29,3 Gew.-% wässrigen Monoethanolaminlösung 90% des Kohlendioxids abgetrennt. Das regenerierte Absorptionsmittel läuft mit einer Temperatur von 40°C zu. Das recyclierte Waschwasser wird auf 40°C abgekühlt. An Make-up Wasser werden 38 kg/h benötigt. Es wird mit dieser Konfiguration ein Restgehalt von 5 v-ppm MEA am Austritt der Wasserwäsche berechnet.

### Beispiel 4:

Dieses Beispiel beruht auf der Anlagenkonfiguration von Beispiel 2. Oberhalb des Zulaufes des Absorptionsmittels war eine erste Waschzone (ohne Recyclierung) mit einer Höhe von 4,5 m, oberhalb der ersten Waschzone eine zweite Waschzone mit einer Höhe von 3 m zur Wasserwäsche mit Recyclierung und Kühlung installiert.

Auf die erste Waschzone werden im Gegenstrom zum Gas 209 kg/h Waschwasser aufgegeben, die der Menge des in der zweiten Waschzone aufgegebenen Make-up Wassers und durch die Abkühlung des Gases auskondensierten Wassers entsprechen. Damit wird ein Monoethanolamingehalt im austretenden Gas von 40 v-ppb erreicht. Die Flüssigkeitsbelastung in der ersten Waschzone beträgt 0,7 m³/(m²h) und liegt somit oberhalb der Entnetzungsgrenze der strukturierten Packung (Herstellerangaben: 0,2 m³/(m²h); Quelle: Sulzer Prospekt).

### Vergleichsbeispiel 5

Bei der Anlagenkonfiguration von Beispiel 4 werden die Waschzonen vertauscht. Oberhalb des Zulaufes des Absorptionsmittels befindet sich eine erste Waschzone mit Recyclierung und Kühlung mit einer Höhe von 3 m, oberhalb der ersten Waschzone eine zweite Waschzone mit einer Höhe von 3 m (ohne Recyclierung). Das CO₂-arme Gas wird zuerst durch die erste Waschzone geleitet und anschließend im Gegenstrom zum Make-up Wasser durch die zweite Waschzone. Für die zweite Waschzone ergibt sich nur noch eine Flüssigkeitsbelastung von 0,1 m³/(m²h). Diese liegt unter der Entnetzungsgrenze der verwendeten Packung und eine ausreichende bzw. eine gleichmäßige Benetzung und somit Trennleistung kann damit nicht gewährleistet werden.

## Patentansprüche

1. Verfahren zur Entfernung saurer Gase aus einem Fluidstrom, bei dem man
a) den Fluidstrom in einer Absorptionszone mit einem Absorptionsmittel behandelt, das eine wässrige Lösung wenigstens eines Amins umfasst,
b) den behandelten Fluidstrom durch wenigstens zwei Waschzonen führt und mit einer nicht-sauren wässrigen Phase behandelt, um mitgeführtes Amin und/oder mitgeführte Amin-Zersetzungsprodukte zumindest teilweise in die wässrige Phase zu überführen, wobei man über wenigstens eine Waschzone wässrige Phase recycliert und durch wenigstens eine Waschzone wässrige Phase ohne Recyclierung führt,
wobei eine erste Waschzone oberhalb der Absorptionszone und eine zweite Waschzone oberhalb der ersten Waschzone angeordnet ist, wobei man über die zweite Waschzone wässrige Phase recycliert, einen Teilstrom der über die zweite Waschzone recyclierten wässrigen Phase durch die erste Waschzone führt und aus der ersten Waschzone ablaufende wässrige Phase mit dem Absorptionsmittel in der Absorptionszone vereinigt, und die über die zweite Waschzone recyclierte wässrige Phase kühlt.

2. Verfahren nach Anspruch 1, wobei die Waschzonen Füllkörper, Packungen und/oder Böden aufweisen.

3. Verfahren nach Anspruch 1 oder 2, wobei die Absorptionszone in einer Absorptionskolonne angeordnet und wenigstens eine Waschzone als oberhalb der Absorptionszone angeordnete Sektion der Absorptionskolonne ausgebildet ist.

4. Verfahren nach Anspruch 1 oder 2, wobei die Absorptionszone in einer Absorptionskolonne angeordnet und wenigstens eine Waschzone in einer von der Absorptionskolonne verschiedenen Waschkolonne angeordnet ist.

5. Verfahren nach einem der vorhergehenden Ansprüche, wobei man Zulaufwasser in die zweite Waschzone speist.

6. Verfahren nach einem der vorhergehenden Ansprüche, wobei man das beladene Absorptionsmittel in einem Stripper durch Erwärmen unter teilweiser Verdampfung des Absorptionsmittels regeneriert, wobei die sauren Gase zumindest teilweise freigesetzt werden.

7. Verfahren nach Anspruch 5, wobei man das beladene Absorptionsmittel in einem Stripper durch Erwärmen unter teilweiser Verdampfung des Absorptionsmittels regeneriert, wobei die sauren Gase zumindest teilweise freigesetzt werden, und man die freigesetzten sauren Gase kühlt, um mitgeführten Wasserdampf zumindest teilweise auszukondensieren und das Kondensat zumindest teilweise als Zulaufwasser verwendet.

8. Verfahren nach Anspruch 5 wobei das Zulaufwasser zumindest teilweise Frischwasser umfasst.

9. Verfahren nach Anspruch 8, wobei die Menge an Frischwasser im Wesentlichen der Wasserverlustmenge des Absorptionsmittelkreislaufs entspricht.

10. Verfahren nach einem der vorhergehenden Ansprüche, wobei man den behandelten Fluidstrom anschließend mit einer sauren wässrigen Lösung wäscht.

11. Verfahren nach Anspruch 10, wobei man den behandelten Fluidstrom durch eine Waschzone führt, über die man die saure wässrige Lösung recycliert.

12. Verfahren nach Anspruch 10 oder 11, wobei man als saure wässrige Lösung ein saures Prozesswasser aus der Behandlung Schwefeldioxid-haltiger Gase verwendet.

13. Verfahren nach einem der vorhergehenden Ansprüche, wobei das Amin wenigstens ein primäres oder sekundäres Amin umfasst.

14. Verfahren nach einem der vorhergehenden Ansprüche, wobei das Amin wenigstens ein Alkanolamin und/oder wenigstens ein Piperazinderivat umfasst.

## Claims

1. A method for removing acid gases from a fluid stream, which comprises
a) treating the fluid stream in an absorption zone with an absorption medium which comprises an aqueous solution of at least one amine,
b) conducting the treated fluid stream through at least two scrubbing zones and treating it with a non-acidic aqueous phase in order to transfer entrained amine and/or entrained amine decomposition products at least in part to the aqueous phase, wherein aqueous phase is recycled via at least one scrubbing zone and aqueous phase is conducted through at least one scrubbing zone without recycling,
wherein a first scrubbing zone is arranged above the absorption zone and a second scrubbing zone is arranged above the first scrubbing zone, wherein aqueous phase is recycled via the second scrubbing zone, a substream of the aqueous phase recycled via the second scrubbing zone is conducted through the first scrubbing zone and aqueous phase draining from the first scrubbing zone is combined with the absorption medium in the absorption zone, and the aqueous phase recycled via the second scrubbing zone is cooled.

2. The method according to claim 1, wherein the scrubbing zones have packed beds, ordered packings and/or trays.

3. The method according to claim 1 or 2, wherein the absorption zone is arranged in an absorption column and at least one scrubbing zone is formed as a section of the absorption column arranged above the absorption zone.

4. The method according to claim 1 or 2, wherein the absorption zone is arranged in an absorption column and at least one scrubbing zone is arranged in a scrubbing column different from the absorption column.

5. The method according to any one of the preceding claims, wherein feed water is fed into the second scrubbing zone.

6. The method according to any one of the preceding claims, wherein the loaded absorption medium is regenerated in a stripper by warming with partial evaporation of the absorption medium, wherein the acid gases are at least in part released.

7. The method according to claim 5, wherein the loaded absorption medium is regenerated in a stripper by warming with partial evaporation of the absorption medium, wherein the acid gases are at least in part released, and the released acid gases are cooled in order to at least partially condense out entrained water vapor, and the condensate is used at least in part as feed water.

8. The method according to claim 5, wherein the feed water comprises at least in part fresh water.

9. The method according to claim 8, wherein the amount of fresh water substantially corresponds to the amount of water lost from the absorption medium circuit.

10. The method according to any one of the preceding claims, wherein the treated fluid stream is then scrubbed with an acidic aqueous solution.

11. The method according to claim 10, wherein the treated fluid stream is conducted through a scrubbing zone via which the acidic aqueous solution is recycled.

12. The method according to claim 10 or 11, wherein, as acidic aqueous solution, an acidic process water from the treatment of sulfur dioxide-comprising gases is used.

13. The method according to any one of the preceding claims, wherein the amine comprises at least one primary or secondary amine.

14. The method according to any one of the preceding claims, wherein the amine comprises at least one alkanolamine and/or at least piperazine derivative.

## Revendications

1. Procédé pour éliminer des gaz acides d'un flux de fluide, dans lequel
a) on traite le flux de fluide dans une zone d'absorption avec un absorbant qui comprend une solution aqueuse d'au moins une amine,
b) on guide le flux de fluide traité au travers d'au moins deux zones de lavage et on le traite avec une phase aqueuse non acide, en vue de transférer l'amine entraînée et/ou les produits de décomposition entraînés de l'amine au moins partiellement dans la phase aqueuse, de la phase aqueuse étant recyclée via au moins une zone de lavage et de la phase aqueuse étant guidée sans recyclage au travers d'au moins une zone de lavage,
une première zone de lavage étant située au-dessus de la zone d'absorption et une deuxième zone de lavage étant située au-dessus de la première zone de lavage, la phase aqueuse étant recyclée via la deuxième zone de lavage, un flux partiel de la phase aqueuse recyclée via la deuxième zone de lavage étant guidé au travers de la première zone de lavage et la phase aqueuse s'écoulant de la première zone de lavage étant réunie avec l'absorbant dans la zone d'absorption et la phase aqueuse recyclée via la deuxième zone de lavage étant refroidie.

2. Procédé selon la revendication 1, les zones de lavage présentant des corps de remplissage, des garnissages et/ou des plateaux.

3. Procédé selon la revendication 1 ou 2, la zone d'absorption étant disposée dans une colonne d'absorption et au moins une zone de lavage étant réalisée sous forme de section de la colonne d'absorption disposée au-dessus de la zone d'absorption.

4. Procédé selon la revendication 1 ou 2, la zone d'absorption étant disposée dans une colonne d'absorption et au moins une zone de lavage étant disposée dans une colonne de lavage différente de la colonne d'absorption.

5. Procédé selon l'une quelconque des revendications précédentes, de l'eau d'alimentation étant injectée dans la deuxième zone de lavage.

6. Procédé selon l'une quelconque des revendications précédentes, l'absorbant chargé étant régénéré dans un dispositif de rectification par chauffage avec évaporation partielle de l'absorbant, les gaz acides étant au moins partiellement libérés.

7. Procédé selon la revendication 5, l'absorbant chargé étant régénéré dans un dispositif de rectification par chauffage avec évaporation partielle de l'absorbant, les gaz acides étant au moins partiellement libérés et les gaz acides libérés étant refroidis en vue de séparer au moins partiellement par condensation la vapeur d'eau entraînée et le condensat étant utilisé au moins partiellement comme eau d'alimentation.

8. Procédé selon la revendication 5, l'eau d'alimentation comprenant au moins partiellement de l'eau fraîche.

9. Procédé selon la revendication 8, la quantité d'eau fraîche correspondant essentiellement à la quantité d'eau perdue du circuit d'absorbant.

10. Procédé selon l'une quelconque des revendications précédentes, le flux de fluide traité étant ensuite lavé avec une solution aqueuse acide.

11. Procédé selon la revendication 10, le flux de fluide traité étant guidé au travers d'une zone de lavage via laquelle on recycle la solution aqueuse acide.

12. Procédé selon la revendication 10 ou 11, une eau de procédé acide provenant du traitement de gaz contenant du dioxyde de soufre étant utilisée comme solution aqueuse acide.

13. Procédé selon l'une quelconque des revendications précédentes, l'amine comprenant au moins une amine primaire ou une amine secondaire.

14. Procédé selon l'une quelconque des revendications précédentes, l'amine comprenant au moins une alcanolamine et/ou un dérivé de pipérazine.
